# FASCICULE DE BREVET EUROPEEN

(11) **EP 1 397 264 B1**
(45) Date de publication et mention de la délivrance du brevet: **21.06.2006**
(21) Numéro de dépôt: 02735510.6
(22) Date de dépôt: 26.04.2002
(51) Int. Cl.: B60H 1/00

(54) **CONDUIT AERAULIQUE STRUCTURANT**
STRUKTUR EINER LUFTLEITUNG
STRUCTURING AIR DUCT

(30) Priorité: 27.04.2001 FR 0105711
(43) Date de publication de la demande: 17.03.2004
(73) Titulaire: Faurecia Interieur Industrie, 92000 Nanterre (FR)
(72) Inventeur: LABORIE, Jean-Michel, F-46270 Bagnac sur Celle (FR); DUCHEZ, David, c/o Faurecia Interieur Industrie, F-60114 Meru (FR)
(74) Mandataire: Prieur, Patrick
(86) Numéro de dépôt international: PCT/FR2002/001469
(87) Numéro de publication internationale: WO 2002/087911

(56) Documents cités:
- DE-A- 19 623 579
- DE-U- 8 912 822
- FR-A- 2 772 682
- FR-A- 2 789 043
- FR-A- 2 796 577
- PATENT ABSTRACTS OF JAPAN vol. 010, no. 365 (M-542), 6 décembre 1986 (1986-12-06) & JP 61 160316 A (TOYOTA MOTOR CORP), 21 juillet 1986 (1986-07-21) cité dans la demande

## Description

L'invention concerne un conduit aéraulique de véhicule automobile.

L'invention a plus précisément pour objet un conduit aéraulique du type structurant, supportant une partie des efforts encaissés par le véhicule, le conduit aéraulique remplissant en particulier également la fonction de traverse intégrée à la structure du véhicule et supportant différents accessoires.

Elle vise à réaliser de manière simple, fiable et peu coûteuse un conduit aéraulique présentant une résistance mécanique élevée et une étanchéité satisfaisante à l'air devant circuler à l'intérieur.

Telle qu'indiqué en partie introductive de FR-A-2 796 577, il est connu de réaliser un conduit aéraulique de véhicule automobile s'étendant suivant une direction d'allongement et comprenant deux demi-coques en vis-à-vis telles que chaque demi-coque présente :
- une portion tubulaire s'étendant suivant la direction d'allongement du conduit, les portions tubulaires définissant entre elles une cavité aéraulique s'étendant suivant ladite direction d'allongement,
- deux flancs latéraux s'étendant de part et d'autre de la portion tubulaire et présentant chacun une surface de contact venant au contact de l'une des surfaces de contact de l'autre demi-coque, et
- un cordon de soudure continu s'étende sensiblement suivant la direction d'allongement du conduit entre les surfaces de contact des demi-coques qui sont au contact l'une de l'autre.

Une telle solution permet certes d'obtenir une étanchéité entre les deux demi-coques. Toutefois, elle n'est pas pleinement satisfaisante pour ce qui concerne la résistance mécanique en cas de choc. En effet, la demanderesse s'est aperçue que le cordon de soudure continu présente l'avantage par rapport à une soudure discontinue (par exemple soudure par ultra-sons, laquelle est constituée par une succession de points) d'obtenir une étanchéité entre les demi-coques, mais qu'elle présente également une faiblesse en termes de résistance mécanique.

En fait, lors d'un accident, le conduit aéraulique subit des efforts mécaniques multi-axiaux, dans différentes zones situées notamment au niveau de la colonne de direction et du module de coussin gonflable. Or, ces efforts présentent une composante de cisaillement du cordon de soudure et lorsque la rupture de l'un des cordons de soudure se produit dans une zone, elle se propage rapidement suivant la direction d'allongement du conduit, de sorte que le conduit s'ouvre latéralement. La résistance mécanique du conduit est alors considérablement réduite.

Ceci est particulièrement vrai dans le cas d'un choc frontal où les pieds avant du véhicule ont tendance à se rapprocher et à engendrer un cintrage du conduit aéraulique structurant.

Par conséquent, la solution indiquée en partie introductive de FR-A-2 796 577 ne s'est pas révélée mécaniquement satisfaisante.

Par ailleurs, jP-A-61160316 divulgue un conduit aéraulique comprenant deux demi-coques venant au contact l'une de l'autre par l'intermédiaire de flancs latéraux et maintenues entre elles par emmoussage. Afin d'éviter que la mousse n'entre à l'intérieur du conduit, il est prévu des chicanes formées par des nervures venant en saillie par rapport aux surfaces de contact.

Toutefois, les diverses réalisations illustrées dans JP-A-61160316 ne sont pas pleinement satisfaisantes, en particulier en ce qui concerne l'assemblage des deux demi-coques par vissage qui est très long.

D'autre part, la technique d'emmoussage est relativement complexe à mettre en oeuvre, ne peut être utilisée de manière intéressante que dans certains cas particuliers (conduit à proximité de la surface extérieure de la planche de bord) et ne permet pas en tant que telle d'obtenir une cohésion élevée entre les demi-coques et par voie de conséquence une forte résistance aux contraintes encaissées par le véhicule de la part du conduit.

Pour remédier aux inconvénients précités, l'invention propose que lesdites demi-coques présentent en outre deux éléments d'arrêt présentant les caractéristiques suivantes :
- chaque élément d'arrêt définit une nervure s'étendant suivant la direction d'allongement du conduit et venant en saillie par rapport à l'une des surfaces de contact,
- chaque élément d'arrêt présente, suivant une direction perpendiculaire à la surface de contact par rapport à laquelle il fait saillie, une zone extrême,
- chaque élément d'arrêt présente, une surface d'arrêt s'étendant entre la zone extrême et l'une des surfaces de contact, ladite surface d'arrêt appartenant à l'une des demi-coques et étant à proximité immédiate d'une surface de butée ménagée sur l'autre demi-coque.

Le cordon de soudure continu et les éléments d'arrêt sont deux moyens parfaitement complémentaires. En effet, les éléments d'arrêt permettent non seulement de faciliter le positionnement des demi-coques relativement l'une à l'autre, mais surtout d'augmenter considérablement la résistance mécanique du conduit en relation avec le cordon de soudure. Lorsque le conduit est soumis auxdits efforts élevés, les éléments d'arrêt viennent buter contre les surfaces d'arrêt, absorbent une partie des efforts subis par le conduit et soulagent ainsi la soudure, en particulier en contrant de manière efficace les efforts de torsion et de cisaillement subis par la soudure. Ledit cordon de soudure continu permet quant à lui en une seule opération de réaliser l'étanchéité entre les demi-coques et de les lier entre elles.

Un tel cordon de soudure continu peut être réalisé en ménageant un bourrelet sur deux des surfaces de contact et en faisant vibrer les deux demi-coques au contact l'une de l'autre ou en utilisant un miroir chauffant.

Selon une première caractéristique, l'invention propose que :
- chaque élément d'arrêt soit disposé entre la portion tubulaire de l'une des demi-coques et l'un des flancs de ladite demi-coque,
- le conduit présente en outre deux zones en creux complémentaires des éléments d'arrêts,
- lesdites zones en creux intègrent lesdites surfaces de butée.

Cette solution permet d'obtenir un conduit relativement simple, résistant et compact.

Selon une caractéristique complémentaire, l'invention propose que:
- chaque portion tubulaire présente une surface interne délimitant en partie la cavité aéraulique,
- chaque élément d'arrêt présente une surface interne délimitant en partie la cavité aéraulique,
- la surface interne des éléments d'arrêt soit disposée dans le prolongement de la surface interne de chaque portion tubulaire sans former de décrochement par rapport à elles.

Ainsi, bien que les éléments d'arrêt soient disposés à proximité immédiate de la cavité aéraulique, ils ne viennent pas en saillie à l'intérieur de ladite cavité aéraulique et ne perturbent pas l'écoulement à l'intérieur. Les problèmes de bruit ou de perte de charge sont ainsi évités

Afin de simplifier la réalisation du conduit et simplifier le positionnement des deux demi-coques, l'invention propose que :
- les deux éléments d'arrêt soient disposés tous les deux sur l'une des demi-coques,
- les deux zones en creux soient ménagées sur l'autre demi-coque.

Afin d'améliorer encore la résistance du conduit, l'invention propose que le conduit comprenne en outre, dans ladite zone extrême des éléments d'arrêt, au moins un cordon de soudure reliant les deux demi-coques.

Ce cordon de soudure contribue d'autant plus à améliorer la résistance mécanique du conduit qu'il n'est pas disposé dans le même plan que le cordon de soudure entre les surfaces de contact.

Avantageusement, les surfaces d'arrêt forment un angle compris entre 45 degrés et 90 dégrés avec les surfaces de contacts planes, de manière à créer une butée efficace pour s'opposer aux efforts de torsion et de cisaillement subis par le conduit.

Selon une autre caractéristique avantageuse de l'invention, le cordon de soudure est réalisé par vibration, de sorte que le conduit présente les caractéristiques suivantes :
- le cordon de soudure est formé par un bourrelet s'étendant suivant la direction d'allongement du conduit,
- il comprend au moins une portion rectiligne et une portion courbe,
- les éléments d'arrêt sont présents dans la portion rectiligne et absents dans la portion courbe.

Compte tenu du déplacement (translation) relatifs nécessaires entre les deux demi-coques pour réaliser ce type de soudure, il n'est pas possible de disposer les éléments d'arrêt dans la portion courbe.

L'invention va apparaître encore plus clairement dans la description qui va suivre, faite en référence aux dessins annexés dans lesquels :
- la figure 1 est une vue en coupe transversale suivant le plan repéré I à la figure 3, d'un conduit conforme à l'invention,
- la figure 2 est une vue à échelle agrandie du détail repéré II à la figure 1,
- la figure 3 est une vue éclatée en perspective du conduit,
- la figure est une vue conformément à la figure 2 d'une variante de conduit,
- la figure est une vue conformément à la figure 2 d'une autre variante de conduit.

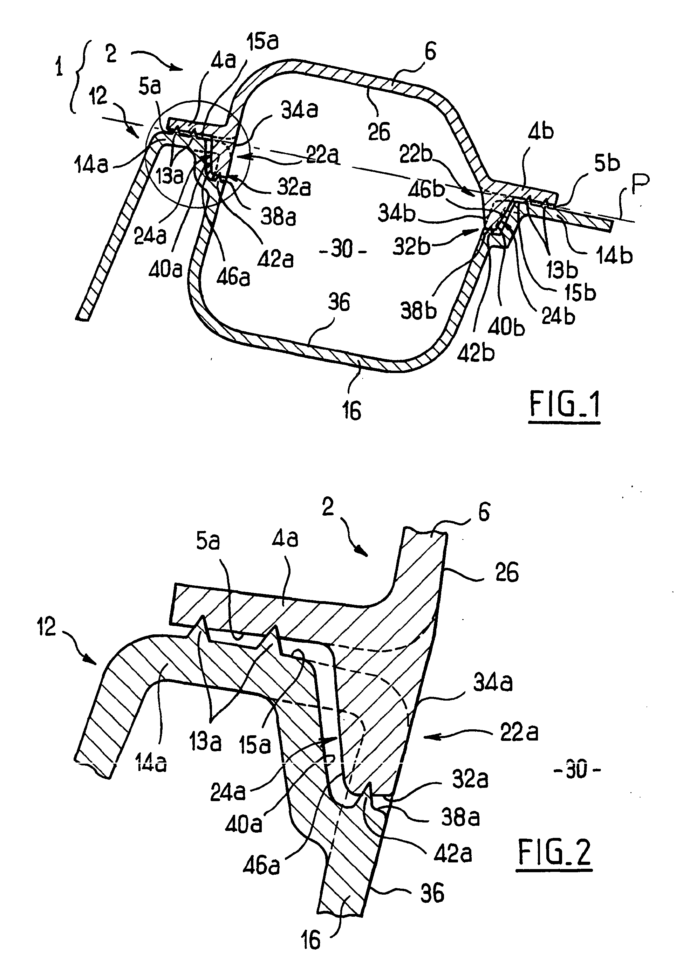

Les figures 1 à 3 illustrent un conduit 1 comprenant une demi-coque supérieure 2 et une demi-coque inférieure 12 s'étendant suivant une direction d'allongement 10.

Chaque demi-coque 2,12 comporte un flanc avant, respectivement supérieur 4a et inférieur 14a, un flanc arrière, respectivement supérieur 4b et inférieur 14b, et une portion tubulaire respectivement supérieure 6 et inférieure 16 s'étendant entre les flancs avant et arrière respectifs. Les portions tubulaires 6, 16 présentent une surface intérieure 26, 36 délimitant une cavité aéraulique 30, ici en deux parties.

Le flanc avant supérieur 4a présente une surface supérieure avant 5a venant au contact d'une surface inférieure avant 15a appartenant au flanc inférieur avant 14a, tandis que le flanc arrière supérieur 4b présente une surface supérieure arrière 5b venant au contact d'une surface inférieure arrière 15b appartenant au flanc inférieur arrière 14b. Toutes ces surfaces de contact 5a, 5b,15a,15b sont sensiblement planes et s'étendent suivant un plan P sensiblement horizontal contenant la direction d'allongement 10.

Le fait que le plan P soit sensiblement horizontal est favorable pour résister aux efforts engendrés par un choc frontal où les pieds avant du véhicule ont tendance à engendrer un cintrage du conduit 1 dans un plan vertical contenant la direction d'allongement 10.

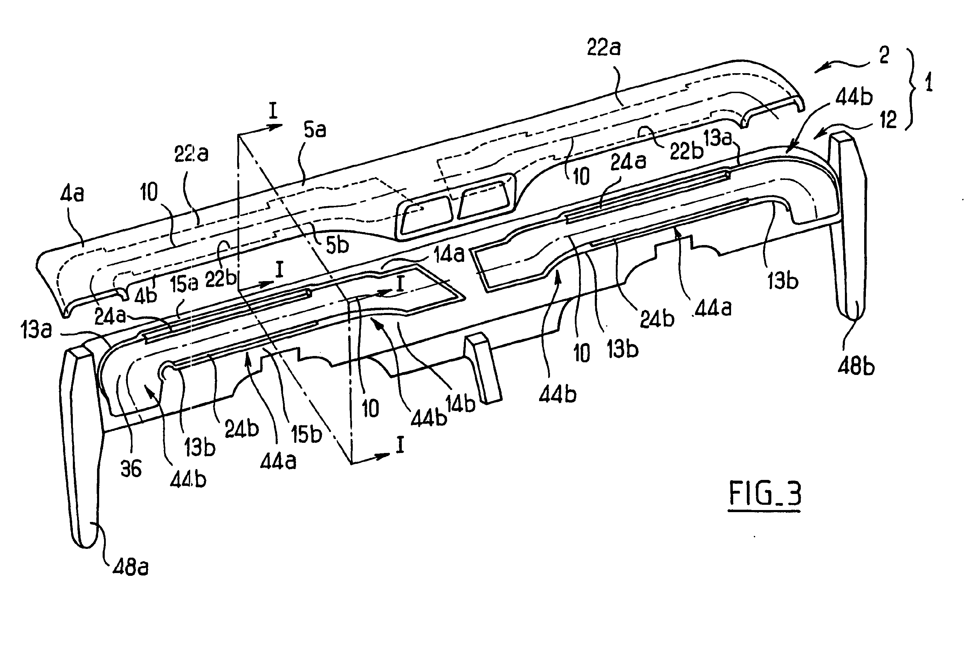

Les surfaces de contact supérieures 5a, 5b et inférieures 15a, 15b sont liées les unes aux autres par l'intermédiaire de deux bourrelets 13a, 13b (un seul a été représenté sur la figure 3) faisant saillie sur chacune des surfaces de contact inférieures 15a,15b et fusionnés à la surface de contact supérieure respective 5a, 5b, ici par mise en vibration relative des surfaces au contact l'une de l'autre.

La demi-coque supérieure 2 comporte en outre une nervure avant 22a rectiligne faisant saillie de la surface de contact supérieure avant 5a et une nervure arrière 22b également rectiligne faisant saillie de la surface de contact supérieure arrière 5b. Les nervures 22a, 22b sont situées entre la portion tubulaire supérieure 6 et chacun des flancs supérieurs 4a, 4b. Elles tendent à prolonger la portion tubulaire supérieure au-delà des flancs supérieurs 4a, 4b et présentent chacune une zone extrême 32a, 32b formant sommet, une surface interne 34a, 34b et une surface externe 46a, 46b.

Les surfaces internes 34a, 34b sont situées dans le prolongement des surfaces internes 26, 36 des portions tubulaires supérieure 6 et inférieure 16. En particulier, la surface interne du conduit 1, incluant les surfaces internes 34a, 26, 34b et 36 ne présente ni décrochement, ni rupture de courbure.

Les surfaces externes 46a, 46b des nervures, respectivement 22a, 22b, sont sensiblement planes et s'étendent sensiblement perpendiculaires aux surfaces de contact supérieures 5a, 5b de laquelle elles font saillie.

La demi-coque inférieure 12 présente en regard de chacune des nervures 22a, 22b une zone en creux 24a, 24b comprenant une surface de base 38a, 38b et une surface de butée 40a, 40b.

Les surfaces de butée 40a, 40b sont disposées en regard et à proximité immédiate (l'écart a été agrandi sur les figures pour des raisons de clarté des dessins) des surfaces externes 46a, 46b, afin de servir de butée aux nervures 22a, 22b lorsque le conduit 1 est soumis à des efforts de torsion ou de cisaillement.

En outre, les nervures 22a, 22b sont soudées à la demi-coque inférieure 12 dans leur zone extrême 32a, 32b, par l'intermédiaire d'un bourrelet 42a, 42b venant en saillie sur la surface de base 38a des zones en creux 24a, 24b.

Tel qu'illustré à la figure 3, le conduit présente des parties rectilignes et des parties courbes. Les nervures 22a, 22b ne sont présentent que dans les parties rectilignes et s'étendent suivant la direction d'allongement 10. En revanche, les nervures 22a, 22b sont absentes des parties courbes en raison des contraintes imposées par le procédé de soudage par vibration. En utilisant, un autre procédé de soudage, par exemple par miroir chauffant, il serait possible de disposer les nervures tout le long du conduit 1.

Le conduit 1, ici sa demi-coque inférieure 12, intègre des supports de fixation 48a, 48b à la structure du véhicule.

En fonction du niveau d'effort auquel le conduit doit résister, le conduit sera avantageusement réalisé en acrylonitrile butadiène styrène (ABS) copolymère, ou en polypropylène chargé de talc entre 10% et 40% (en poids) et renforcé de fibres de verre. D'autres matériaux pourraient également convenir. En particulier, il est généralement avantageux que le conduit soit réaliser en un matériau hybride consistant en une ame métallique surmoulé de plastique.

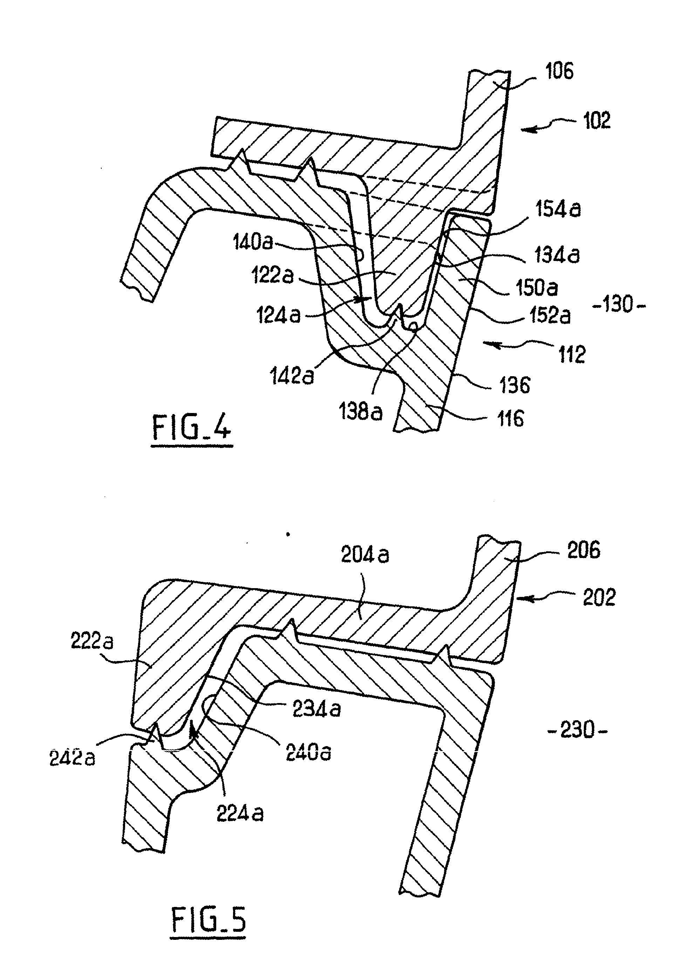

La figure 4 illustre une variante de conduit se distinguant essentiellement de la réalisation illustrée aux figures 1 à 3 en ce que les nervures ont été disposées légèrement à l'écart des portions tubulaires 106, 116 des demi-coques 102,112. Les éléments correspondants à ceux des figures 1 à 3 ont un repère augmenté de 100.

Chaque zone en creux 124a comprend un rebord 150a présentant une première surface 152a définissant une partie de la surface interne 136 délimitant la cavité aéraulique et une deuxième surface 154a formant surface de butée vis-à-vis de la surface interne 134a de la nervure 122a correspondante. Chacune des zones en creux 124a dans laquelle s'insère l'une des nervures 122a définit ainsi à proximité de la cavité aéraulique 130 une gorge délimitée par la surface de base 138a et les surfaces de butées 140a, 154a s'étendant de part et d'autre de ladite nervure 122a. Les rebords 150a permettent d'éviter que les bourrelets 142a ne s'étendent après soudure à l'intérieur de la cavité aéraulique 130 et génèrent des bruits d'écoulement d'air.

La figure 5 illustre une variante de conduit se distinguant essentiellement de la réalisation illustrée aux figures 1 à 3 en ce que les nervures ont été disposées nettement à l'écart des portions tubulaires des demi-coques, de sorte que chaque flanc supérieur 204a est situé entre l'une des nervures 222a et la portion tubulaire supérieure 206 de la demi-coque supérieure 202. Les éléments correspondants à ceux des figures 1 à 3 ont un repère augmenté de 200.

Chaque surface interne 234a est destinée à servir de butée à l'une des nervures 222a et plus précisément à la surface de butée 240a de la zone en creux 224a correspondante. Ainsi, les bourrelets 242a ne risquent pas de s'étendre après soudure à l'intérieur de la cavité aéraulique 230 et de générer des bruits d'écoulement d'air.

## Revendications

1. Conduit aéraulique (1) de véhicule automobile s'étendant suivant une direction d'allongement (10) et comprenant deux demi-coques en vis-à-vis (2,12) telles que :
- chaque demi-coque présente :
• une portion tubulaire (6,16) s'étendant suivant la direction d'allongement du conduit, les portions tubulaires définissant entre elles une cavité aéraulique (30) s'étendant suivant ladite direction d'allongement,
• deux flancs latéraux (4a, 4b 14a, 14b) s'étendant de part et d'autre de la portion tubulaire et présentant chacun une surface de contact (5a, 5b; 15a, 15b) venant au contact de l'une des surfaces de contact de l'autre demi-coque, et
- un cordon de soudure continu (13a, 13b) s'étend sensiblement suivant la direction d'allongement du conduit entre les surfaces de contact des demi-coques qui sont au contact l'une de l'autre,
ledit conduit étant **caractérisé en ce que** lesdites demi-coques présentent en outre deux éléments d'arrêt (22a, 22b) présentant les caractéristiques suivantes :
- chaque élément d'arrêt définit une nervure s'étendant suivant la direction d'allongement du conduit et venant en saillie par rapport à l'une des surfaces de contact,
- chaque élément d'arrêt présente, suivant une direction perpendiculaire à la surface de contact par rapport à laquelle il fait saillie, une zone extrême (32a, 32b),
- chaque élément d'arrêt présente, une surface d'arrêt (46a, 46b) s'étendant entre la zone extrême et l'une des surfaces de contact, ladite surface d'arrêt appartenant à l'une des demi-coques (2) et étant à proximité immédiate d'une surface de butée (40a, 40b) ménagée sur l'autre demi-coque (12).

2. Conduit selon la revendication 1, **caractérisé en ce que**:
- chaque élément d'arrêt est disposé entre la portion tubulaire (6) de l'une des demi-coques et l'un des flancs (4a, 4b) de ladite demi-coque,
- le conduit présente en outre deux zones en creux (24a, 24b) complémentaires des éléments d'arrêts,
- lesdites zones en creux intègrent lesdites surfaces de butée.

3. Conduit selon la revendication 2, **caractérisé en ce que** :
- chaque portion tubulaire présente une surface interne (26, 36) délimitant en partie la cavité aéraulique,
- chaque élément d'arrêt présente une surface interne (34a, 34b) délimitant en partie la cavité aéraulique,
- la surface interne des éléments d'arrêt est disposée dans le prolongement de la surface interne de chaque portion tubulaire sans former de décrochement par rapport à elles.

4. Conduit selon la revendication 1, **caractérisé en ce que** chaque élément d'arrêt (122a, 222a) est disposé à l'écart de la portion tubulaire (106, 206) des demi-coques,
- le conduit présente en outre deux zones en creux (124a, 224a) complémentaires des éléments d'arrêts,
- lesdites zones en creux intègrent lesdites surfaces de butée.

5. Conduit selon la revendication 4, **caractérisé en ce que** l'une au moins des zones en creux (124a) définit une gorge présentant une surface de base (138a) s'étendant entre deux surface de butée (140a, 154a) disposées de part et d'autre des éléments d'arrêt.

6. Conduit selon l'une quelconque des revendications 2 à 5, **caractérisé en ce que** :
- les deux éléments d'arrêt (22a, 22b) sont disposés tous les deux sur l'une (2) des demi-coques,
- les deux zones en creux (24a, 24b) sont ménagées sur l'autre (12) demi-coque.

7. Conduit selon l'une quelconque des revendications précédentes, **caractérisé en ce que** le conduit comprend en outre, dans ladite zone extrême (32a) des éléments d'arrêt, au moins un cordon de soudure (42a, 142a, 242a) reliant les deux demi-coques.

8. Conduit selon l'une quelconque des revendications précédentes, **caractérisé en ce que** les surfaces d'arrêt (46a, 46b) forment un angle compris entre 45 et 90 degrés avec les surfaces de contact (5a, 5b).

9. Conduit selon l'une quelconque des revendications précédentes, **caractérisé en ce que** les surfaces d'arrêt (46a, 46b) sont sensiblement planes.

10. Conduit selon l'une quelconque des revendications précédentes, **caractérisé en ce que** :
- le cordon de soudure est formé par un bourrelet (13a, 13b) s'étendant suivant la direction d'allongement du conduit,
- le conduit comprend au moins une portion rectiligne (44a) et une portion courbe (44b),
- les éléments d'arrêt sont présents dans la portion rectiligne et absents dans la portion courbe.

11. Conduit selon l'une quelconque des revendications précédentes, **caractérisé en ce qu'**il est constitué d'un matériau hybride comprenant une âme métallique surmoulée de plastique.

## Claims

1. Air duct (1) of a motor vehicle, extending in a direction of elongation (10) and comprising two half-shells (2, 12) arranged opposite one another, such that:
- each half-shell has:
• a tubular portion (6, 16) extending in the direction of elongation of the duct, the tubular portions defining between them an air cavity (30) extending in said direction of elongation,
• two lateral flanks (4a, 4b; 14a, 14b) extending one on each side of the tubular portion and each having a contact surface (5a, 5b; 15a, 15b) in contact with one of the contact surfaces of the other half-shell, and
- a continuous weld seam (13a, 13b) extends substantially in the direction of elongation of the duct between the contact surfaces of the half-shells which are in contact with one another,
said duct being **characterized in that** said half-shells also have two stop elements (22a, 22b) having the following features:
- each stop element defines a rib extending in the direction of elongation of the duct and projecting relative to one of the contact surfaces,
- each stop element has, in a direction perpendicular to the contact surface relative to which it projects, an end region (32a, 32b),
- each stop element has a stop surface (46a, 46b) extending between the end region and one of the contact surfaces, said stop surface belonging to one of the half-shells (2) and being in the immediate vicinity of an abutment surface (40a, 40b) provided on the other half-shell (12).

2. Duct according to claim 1, **characterized in that**:
- each stop element is located between the tubular portion (6) of one of the half-shells and one of the flanks (4a, 4b) of said half-shell,
- the duct also has two recessed regions (24a, 24b) complementing the stop elements,
- said recessed regions incorporate said abutment surfaces.

3. Duct according to claim 2, **characterized in that**:
- each tubular portion has an internal surface (26, 36) partially delimiting the air cavity,
- each stop element has an internal surface (34a, 34b) partially delimiting the air cavity,
- the internal surface of the stop elements forms an extension of the internal surface of each tubular portion without forming a step relative thereto.

4. Duct according to claim 1, **characterized in that** each stop element (122a, 222a) is located away from the tubular portion (106, 206) of the half-shells,
- the duct also has two recessed regions (124a, 224a) complementing the stop elements,
- said recessed regions incorporate said abutment surfaces.

5. Duct according to claim 4, **characterized in that** at least one of the recessed regions (124a) defines a groove having a base surface (138a) extending between two abutment surfaces (140a, 154a) located one on each side of the stop elements.

6. Duct according to any one of claims 2 to 5,
**characterized in that**:
- the two stop elements (22a, 22b) are both located on one (2) of the half-shells,
- the two recessed regions (24a, 24b) are provided on the other (12) half-shell.

7. Duct according to any one of the preceding claims, **characterized in that** the duct also comprises, in said end region (32a) of the stop elements, at least one weld seam (42a, 142a, 242a) connecting the two half-shells.

8. Duct according to any one of the preceding claims, **characterized in that** the stop surfaces (46a, 46b) form an angle of from 45 to 90 degrees with the contact surfaces (5a, 5b).

9. Duct according to any one of the preceding claims, **characterized in that** the stop surfaces (46a, 46b) are substantially flat.

10. Duct according to any one of the preceding claims,
**characterized in that**:
- the weld seam is formed by a strip (13a, 13b) extending in the direction of elongation of the duct,
- the duct comprises at least one rectilinear portion (44a) and one curved portion (44b),
- the stop elements are present in the rectilinear portion and absent from the curved portion.

11. Duct according to any one of the preceding claims, **characterized in that** it is constituted by a hybrid material comprising a metal core overmoulded with plastics material.

## Patentansprüche

1. Luftleitung (1) eines Kraftfahrzeugs, die sich entlang einer Längsrichtung (10) erstreckt und zwei einander gegenüberliegende Halbschalen (2,12) aufweist, derart, daß:
- jede Halbschale aufweist:
• einen rohrförmigen Abschnitt (6, 16), der sich entlang der Längsrichtung der Leitung erstreckt, wobei die rohrförmigen Abschnitte zwischen sich einen Lufthohlraum (30) definieren, der sich entlang dieser Längsrichtung erstreckt,
• zwei seitliche Flanken (4a, 4b; 14a, 14b), die sich beiderseits des rohrförmigen Abschnitts erstrecken und jede eine Kontaktoberfläche (5a, 5b; 15a, 15b) aufweist, die mit einer der Kontaktoberflächen der anderen Halbschale in Kontakt kommt, und
- eine kontinuierliche Schweißnaht (13a, 13b), die sich im wesentlichen in Längsrichtung der Leitung zwischen den Kontaktoberflächen der Halbschalen, die miteinander in Kontakt sind, erstreckt,
wobei die Leitung **dadurch gekennzeichnet ist, daß** die Halbschalen außerdem zwei Anschlagelemente (22a, 22b) aufweisen, die die folgenden Merkmale aufweisen:
- jedes Anschlagelement definiert eine Rippe, die sich entlang der Längsrichtung der Leitung erstreckt und bezüglich einer der Kontaktoberflächen vorspringt,
- jedes Anschlagelement weist entlang einer Richtung senkrecht zu der Kontaktoberfläche, bezüglich der es vorspringt, einen äußersten Bereich (32a, 32b) auf,
- jedes Anschlagelement weist eine Anschlagoberfläche (46a, 46b) auf, die sich zwischen dem äußersten Bereich und einer der Kontaktoberflächen erstreckt, wobei die Anschlagoberfläche zu einer der Halbschalen (2) gehört und sich in unmittelbarer Nähe zu einer Widerlagerfläche (40a, 40b), die an der anderen Halbschale (12) gebildet ist, befindet.

2. Leitung nach Anspruch 1, **dadurch gekennzeichnet, daß**
- jedes Anschlagelement zwischen dem rohrförmigen Abschnitt (6) einer der Halbschalen und einer der Flanken (4a, 4b) der Halbschale angeordnet ist,
- die Leitung außerdem zwei vertiefte Bereiche (24a, 24b) aufweist, die zu den Anschlagelementen komplementär sind,
- wobei die vertieften Bereiche die Widerlagerflächen integrieren.

3. Leitung nach Anspruch 2, **dadurch gekennzeichnet, daß**:
- jeder rohrförmige Abschnitt eine innere Oberfläche (26, 36) aufweist, die den Lufthohlraum teilweise begrenzt,
- jedes Anschlagelement eine innere Oberfläche (34a, 34b) aufweist, die den Lufthohlraum zum Teil begrenzt,
- die innere Oberfläche der Anschlagelemente in der Verlängerung der inneren Oberfläche jedes rohrförmigen Abschnitts angeordnet ist, ohne eine Verschiebung in Bezug auf diese zu bilden.

4. Leitung nach Anspruch 1, **dadurch gekennzeichnet, daß** jedes Anschlagelement (122a, 222a) im Abstand von dem rohrförmigen Abschnitt (106, 206) der Halbschalen angeordnet ist,
- die Leitung außerdem zwei vertiefte Bereiche (124a, 224a) aufweist, die zu den Anschlagelementen komplementär sind,
- wobei die vertieften Bereiche die Widerlagerflächen integrieren.

5. Leitung nach Anspruch 4, **dadurch gekennzeichnet, daß** wenigstens einer der vertieften Bereiche (124a) eine Kehle definiert, die eine Basisoberfläche (138a) aufweist, welche sich zwischen zwei Widerlagerflächen (140a, 154a), die beiderseits der Anschlagelemente angeordnet sind, erstreckt.

6. Leitung nach einem der Ansprüche 2 bis 5, **dadurch gekennzeichnet, daß**:
- die beiden Anschlagelemente (22a, 22b) beide auf einer (2) der Halbschalen angeordnet sind,
- die beiden vertieften Bereiche (24a, 24b) auf der anderen (12) Halbschale gebildet sind.

7. Leitung nach einem der vorhergehenden Ansprüche, **dadurch gekennzeichnet, daß** die Leitung in dem äußersten Bereich (32a) der Anschlagelemente außerdem mindestens eine Schweißnaht (42a, 142a, 242a) aufweist, welche die beiden Halbschalen verbindet.

8. Leitung nach einem der vorhergehenden Ansprüche, **dadurch gekennzeichnet, daß** die Anschlagoberflächen (46a, 46b) mit den Kontaktoberflächen (5a, 5b) einen Winkel von zwischen 45 und 90 Grad bilden.

9. Leitung nach einem der vorhergehenden Ansprüche, **dadurch gekennzeichnet, daß** die Anschlagoberflächen (46a, 46b) im wesentlichen eben sind.

10. Leitung nach einem der vorhergehenden Ansprüche, **dadurch gekennzeichnet, daß**:
- die Schweißnaht durch einen Wulst (13a, 13b) gebildet ist, der sich entlang der Längsrichtung der Leitung erstreckt,
- die Leitung mindestens einen geradlinigen Abschnitt (44a) und einen gekrümmten Abschnitt (44b) aufweist,
- die Anschlagelemente in dem geradlinigen Abschnitt vorhanden und in dem gekrümmten Abschnitt nicht vorhanden sind.

11. Leitung nach einem der vorhergehenden Ansprüche, **dadurch gekennzeichnet, daß** sie aus einem Hybridmaterial hergestellt ist, welches einen mit Kunststoff abgeformten Metallkern aufweist.
